# EUROPEAN PATENT APPLICATION

(11) **EP 1 276 329 A2**
(43) Date of publication of application: **15.01.2003**
(21) Application number: 02077600.1
(22) Date of filing: 01.07.2002
(51) Int. Cl.: H04N 7/26

(54) **System and method for secure watermarking of a digital image sequence**

(30) Priority: 10.07.2001 US 902345
(71) Applicant: EASTMAN KODAK COMPANY, Rochester, New York 14650 (US)
(72) Inventor: Jones, Paul W., Rochester, New York 14650-2201 (US)
(74) Representative: Parent, Yves

(57) **Abstract**

A system and method for securely embedding a watermark representing message data into movie data consisting of one or more frames of a digital image sequence, and displaying one or more frames of the digital image sequence containing the embedded watermark, includes providing a secure environment; combining the movie data with the watermark within the secure environment to produce watermarked movie data; and forming a displayed image from the watermarked movie data within the secure environment.

## Description

The invention relates generally to the field of digital image processing, and in particular to a system for embedding watermarks in digital image sequences within a secure environment.

Digital watermarking refers to the embedding of a hidden message in an image or image sequence for such purposes as establishing ownership, tracking the origin of the data, preventing unauthorized copying, or conveying additional information (meta-data) about the content. Watermarking has potential uses in a wide range of products, including digital still and video cameras, printers and other hardcopy output devices, and content delivery services (e.g., Internet-based photofinishing). Recently, there has been significant interest in the electronic distribution and display of theatrical movies, which is termed digital cinema. Studios and distributors have a strong need to protect the movie content from unauthorized use, and watermarking can assist by establishing ownership and tracing the source of stolen content (through the use of hidden date/time/location stamps inserted at the time of the movie distribution and/or presentation). The present invention relates specifically to the watermarking of image sequences, and thus it has usefulness in an application such as digital cinema.

Numerous watermarking methods have been described in the prior art, including both patents and the technical literature. Many of these methods are described in review papers such as: Hartung and Kutter, Multimedia Watermarking Techniques, Proc. IEEE, 87(7), pp. 1079-1107 (1999), and Wolfgang et al., Perceptual Watermarks for Digital Images and Video, Proc. IEEE, 87(7), pp. 1108-1126(1999).

A basic distinction between various methods is whether the watermark is applied in the spatial domain or the frequency domain. Spatial domain watermarking techniques add a watermark pattern directly to the pixel values of a digital image, while frequency domain watermarking techniques add a watermark pattern to the transform coefficients that represent a digital image (e.g., the discrete cosine transform (DCT) coefficients that are used for JPEG and MPEG-compressed images). Examples of spatial domain techniques in the prior art include US Patent 6,044,156 issued March 28, 2000 to Honsinger et al., and US Patent 5,636,292 issued June 3, 1997 to Rhoads. Examples of frequency domain techniques in the prior art include US Patent 5,809,139 issued September 15, 1998 to Girod et al.; US Patent 5,901,178 issued May 4, 1999 to Lee et al.; and US Patent 5,930,369 issued July 27, 1999 to Cox et al.

In either the spatial domain or frequency domain approaches, most techniques make use of a pseudo-random noise (PN) sequence (or sequences) in the watermark embedding and extraction processes. The PN sequence typically serves as a carrier signal, which is modulated by message data, resulting in dispersed message data (i.e., the watermark pattern) that is distributed across a number of pixels or transform coefficients. A secret key (i.e., seed value) is commonly used in generating the PN sequence, and knowledge of the key is required to extract the watermark and the associated original message data. In the context of watermarking for a digital cinema system, it is desirable to embed a watermark at the time that a movie is projected. This allows unique presentation information (indicating the theater, specific screen, time stamp, etc.) to be included in the embedded watermark. If a movie is illegally copied, the unique presentation information (known as a "fingerprint") can then be extracted from the embedded watermark in the copy to indicate the time and place of the theft, as well as any other information that is contained in the watermark. If such information is to be used in legal proceedings, it is necessary to show that the information has not been compromised in any way.

In a typical movie theater, there are numerous people that may have access to the movie content and projection equipment. This includes the theater owner, the projectionist, maintenance personnel, and even individuals who are not employed by the theater but are capable of gaining unauthorized access. This is a serious issue because access to the digital data that represents the movie content allows for easy copying with no loss in quality. To prevent this, it is well understood that the digital movie data must be protected with strong encryption techniques. Such techniques require a secret key to decrypt the encrypted data, which can be securely delivered to the theater via well-known security protocols such as those based on a public key infrastructure (PKI). An extensive description of encryption and security protocols can be found in *Handbook of Applied Cryptography*, Menezes et al., CRC Press, Boca Raton, FL, 1997, ISBN 0-8493-8523-7.

When watermarking is applied to digital movie data, the secret watermarking key provides at least some degree of security in that it is required for embedding and extraction of the watermark. The watermark key can be delivered to the theater using the same secure methods that are used for the decryption key. However, it is not sufficient to control just the watermark key (or keys) in a digital cinema system. Because numerous people may have access to various components in a digital cinema imaging system, it is also necessary to provide security at all potential points where the integrity of the watermarking process could be compromised.

Thus, there is a need therefore for a digital cinema watermarking system that provides security for all aspects of the watermarking process in order to ensure the integrity of the embedded watermark and the information that it represents.

The need is met according to the present invention by providing a system and method for securely embedding a watermark representing message data into movie data consisting of one or more frames of a digital image sequence, and displaying one or more frames of the digital image sequence containing the embedded watermark, that includes providing a secure environment; combining the movie data with the watermark within the secure environment to produce watermarked movie data; and forming a displayed image from the watermarked movie data within the secure environment.

The present invention provides improved security during the embedding of watermarks in a digital image sequence to ensure the validity of the information contained in such watermarks. It also provides secure updating of critical watermarking parameters such as the key and/or message, and secure recording of these updated parameters.
Fig. 1 illustrates a system for the embedding of a watermark into movie data within a secure environment in a digital cinema system;
Fig. 2 illustrates an alternative system for the embedding of a watermark into movie data within a secure environment in a digital cinema system;
Fig. 3 illustrates a system for the embedding of a watermark into compressed movie data within a secure environment in a digital cinema system;
Fig. 4 illustrates a system for the embedding of a watermark within a secure environment in a digital cinema system with local storage of encrypted and compressed data;
Fig. 5 illustrates a system for the embedding of a watermark within a secure environment in a digital cinema system with local storage of decrypted and compressed data;
Fig. 6 illustrates a system for the embedding of a watermark within a secure environment in a digital cinema system using locally generated watermark keys and watermark messages;
Fig. 7 illustrates a system for the embedding of a watermark within a secure environment in a digital cinema system with remote database storage of locally generated watermark keys and watermark messages; and
Fig. 8 illustrates a system for the embedding of a watermark within a secure environment in a digital cinema system using secure watermark root keys and watermark root messages that are produced by a remote watermark server.

As mentioned previously, the secret watermark key(s) can be protected during delivery by using well-known encryption techniques and security protocols. However, in a digital cinema system, it may be desirable to change all or part of the key after a certain number of frames in the movie sequence in order to provide enhanced security and/or minimize the visibility of the watermark pattern (a changing pattern is more difficult for a viewer to detect than a static watermark pattern). The ability to modify the key may imply at least some control of the key generation within the local theater environment. Such modifications of the key must be done in a secure manner, and furthermore, it may be necessary to securely track the key usage in order to perform subsequent extractions.

However, it is not sufficient to control only the watermark key(s) in a digital cinema system. It is also necessary to provide security for the watermark message data, because any tampering with the message data could lead to an incorrect identification of the theater and/or time when the watermark is extracted from an illegal copy. Moreover, it may be desirable to modify the message data after a certain number of frames, such as would be done to update a time code. It also may be necessary to securely track the message usage.

Finally, it is necessary to provide security for the digital movie data after it has been watermarked. Even though the digital movie data has already been watermarked with unique information, it is possible that a second watermark (containing different information than the original watermark) could be embedded as well. It may be impossible to resolve which watermark is the original one (the "deadlock" problem), which destroys validity of the original watermark in any legal proceedings.

In the present invention, security is achieved by performing the watermarking process within a secure environment. A secure environment means that unauthorized individuals cannot access any stored information or any input, output, or internal connections of the process in a meaningful way. This prevents an unauthorized individual from acquiring information about and/or influencing the watermarking process and its parameters. It also prevents the acquisition of digital data that represents the movie, even if the data already includes an embedded watermark.

A secure environment is achieved through the use of physical and logical protection techniques. A simple physical protection technique is to place all system components and any associated information in a locked room that is accessible only with the proper key or combination Similarly, the system components could be contained in a strong physical housing that is resistant to tampering by virtue of its mechanical properties (such as a hardened steel case with a locked lid). The housing could also contain lid switches and other safeguards that disrupt power and erase critical memory locations when tampering occurs. Further physical security can be provided by using high technology methods such as semiconductor chips and circuitry that are especially designed to be rendered inoperable when any tampering occurs. A discussion of some of these high technology security measures can be found in "Tamper resistance - a cautionary note," Anderson et al., *The Second USENIX Workshop on Electronic Commerce Proceedings,* Oakland, CA, Nov. 1996, pp.1 - 11, ISBN 1-880446-83-9. However, in a digital cinema system, it is likely that some information will need to be conveyed from one physical location to another, and appropriate protection must be given to this information through logical methods. For example, the digital data that represents a movie must be transmitted from a distribution site to each theater, and this data can be protected using strong encryption methods and security protocols as described previously.

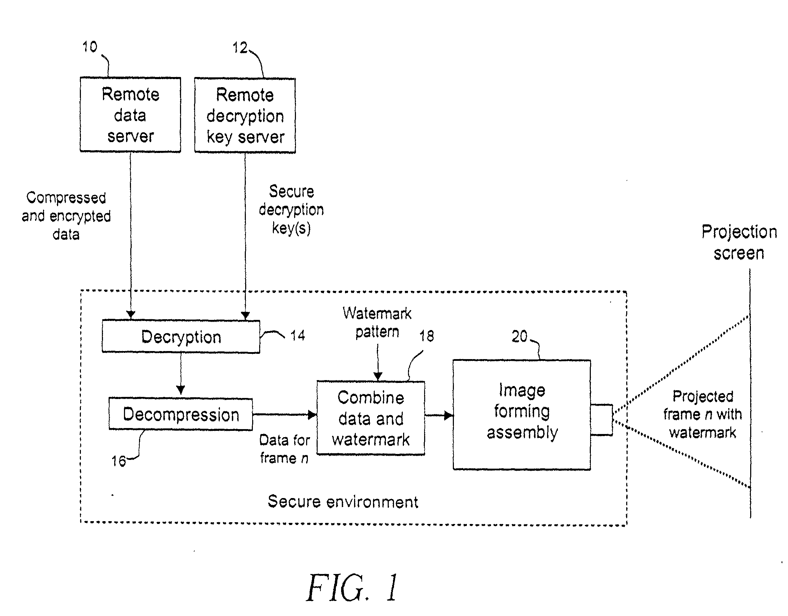

The basic arrangement of a secure digital cinema watermarking system is illustrated in Fig. 1. A remote data server **10** (e.g., the distribution site) delivers compressed and encrypted movie data to the theater. The movie is compressed to provide more efficient transfer of the data within the constraints of current technology, but compression is not essential to the workings of the present invention. The compressed data is encrypted to prevent unauthorized individuals from accessing the digital movie data during its delivery to the theater. A remote decryption key server **12** delivers a secure decryption key (or keys) to the theater for use in decrypting the encrypted movie data. In some systems, the remote data server **10** and the remote decryption key server **12** may be contained within a single server. In other systems, the remote data server could be replaced with another means for delivering movie data to the theater, e.g., a physical storage media such as DVD disks.

At the theater, the compressed and encrypted data and the decryption key(s) are sent to a decryption unit **14.** The decryption unit applies the decryption key and decrypts the compressed and encrypted data to produce compressed movie data that is not encrypted. The compressed movie data is then sent to a decompression unit **16** that produces uncompressed movie data. The uncompressed movie data represents a sequence of one or more frames of digital data. An individual frame is denoted as frame *n (n =* 1, 2, ..., *N),* where *N* is the total number of frames in the movie sequence.

The uncompressed digital data for each frame is sent to a watermarking unit **18** that combines the digital movie data with a watermark pattern to produce movie data containing a watermark. The watermark pattern can be generated using a number of different approaches as will be described shortly, and it is possible that the watermark pattern may be changed after a certain number of frames. It may not be necessary to watermark each frame, but in general at least a substantial number of frames will contain a watermark pattern.

The watermarked movie data is then sent to an image forming assembly **20** that converts the digital data into a visible image that can be viewed by the audience in the theater. The result is a projected frame n that contains an embedded watermark within the displayed movie content. If a video pirate makes an unauthorized copy of the projected movie, the watermark is conveyed with the copy, and it can be subsequently extracted to indicate information about the movie such as the location and time of the illegal copying.

In a preferred embodiment of the present invention, the decryption unit **14,** decompression unit **16,** watermarking unit **18,** and image forming assembly **20** are all contained within a secure environment at the theater as illustrated in Fig. 1. This means that unauthorized individuals cannot access the decrypted data, decompressed data, or watermarked data, and furthermore, they cannot influence or gain information about the watermarking process. The secure environment could be provided by integrating all of these processing units into a single physical unit generically termed the "projector". The projector includes sufficient physical security measures to prevent unauthorized access to any internal components or connections. These measures could include a tamper-resistant housing (such as locked steel case) and/or intrusion-detection circuitry that monitor the overall system integrity and disables the components if unauthorized access occurs. To protect the watermarking and decryption processes, the intrusion-detection circuitry may also erase various memory locations, such as key registers and message registers, if the system integrity is compromised.

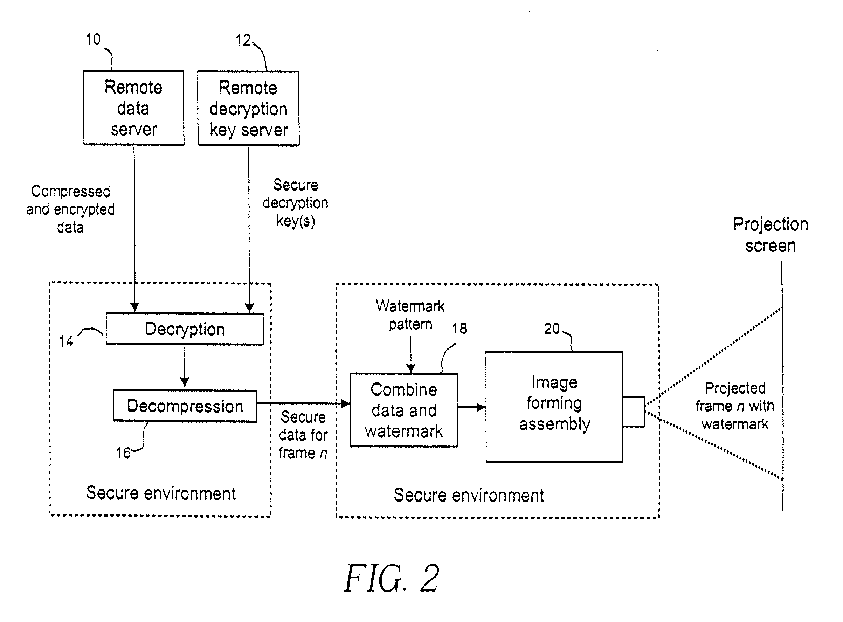

In the preferred embodiment that was just described, the decryption, decompression, watermarking, and image forming processes are all combined into a single, secure unit. However, it may be advantageous to separate these processes into two more physical units that are connected by secure logical connections. As illustrated in Fig. 2, the decryption unit **14** and decompression unit **16** might be housed in one secure physical unit, while the watermarking unit **18** and image forming assembly **20** are housed in another secure physical unit. These two secure units are connected using secure local communication links, where the security is provided by strong encryption/decryption protocols, for example. In this system, the secure physical unit that contains the watermarking unit **18** and the image forming assembly **20** would constitute the projector. Other arrangements of secure physical units with secure local communications links can also be constructed, including placing the watermark unit **18** in a separate physical unit with secure local communication links from the decompression unit **16** and to the image forming assembly **20.**

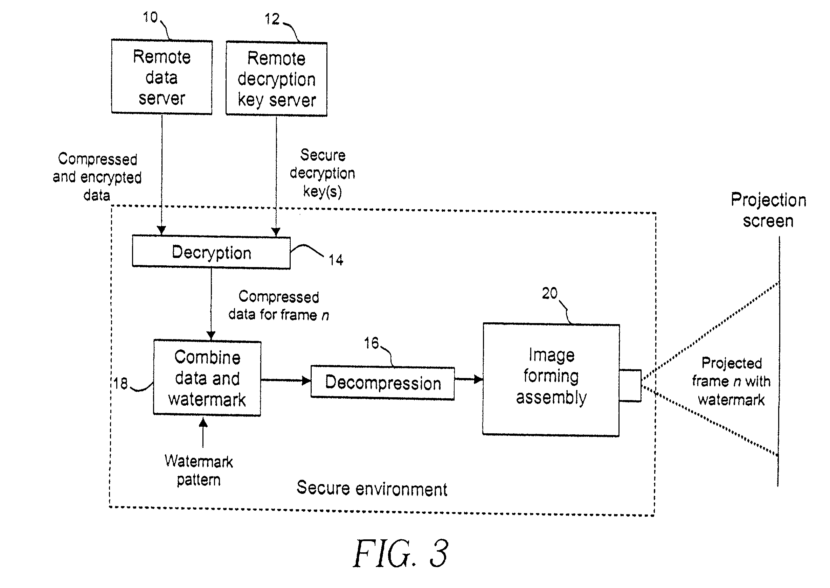

In the secure watermarking system of Fig. 1, the watermark is combined with the uncompressed movie data for a given frame *n*. This watermark combination process could be done in the spatial domain or the frequency domain as described previously. However, in another embodiment of the present invention, the watermark combination process is applied to the compressed data for frame n. Compression techniques such as MPEG and JPEG inherently include a frequency decomposition of the original image data, and thus they provide a convenient framework for performing frequency domain watermarking. Fig. 3 illustrates a secure watermarking system that performs watermarking on compressed data. In this system, the compressed and encrypted movie data is sent from the remote data server **10** to the decryption unit **14,** and the remote decryption key server **12** provides a secure decryption key(s) to the decryption unit. The decryption unit **14** produces compressed movie data that is then combined with the watermark pattern in the watermarking unit **18** to produce compressed data that contains a watermark. The compressed and watermarked data is then sent to the decompression unit **16,** which produces watermarked movie data, i.e., uncompressed movie data containing a watermark. The watermarked movie data is sent to the image forming assembly **20** that converts the digital data into a visible image that can be viewed by the audience in the theater. In this system, the decryption, decompression, watermarking, and image forming processes are again contained within a secure environment, which could be a single secure physical unit or multiple secure physical units that are connected by secure communication links.

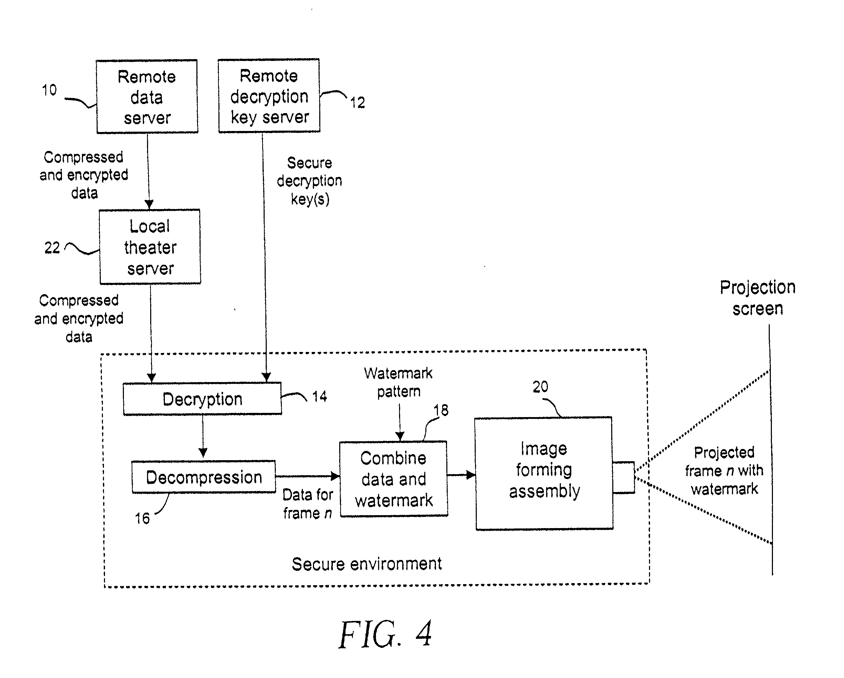

In the secure watermarking systems of Figs. 1-3, the compressed and encrypted data is transmitted directly from the remote data server **10** to the decryption unit **14.** This implies a real-time transmission of the movie data. In many systems, it is desirable to have a local theater server that stores the compressed and encrypted data for playback at a later time. Fig. 4 illustrates this arrangement, where the remote data server **10** sends the compressed and encrypted data to a local theater server **22,** where the data is stored for subsequent use. While compression is not essential to the present invention, it would be used in many systems because of the need for efficient storage and transmission of the movie data. However, the encryption is a necessary component as it protects the data from unauthorized access while it is stored on the local theater server, which may not be in a completely secure environment. At the time that a movie is shown, the local theater server **22** sends the compressed and encrypted data to the decryption unit **14,** which uses the decryption key(s) to produce compressed movie data. As was described for the system of Fig. 1, the compressed data is decompressed by the decompression unit **16,** and a watermark pattern is combined with the decompressed movie data using the watermarking unit **18** to produce watermarked movie data. The watermarked movie data is then sent to the image forming assembly **20,** which forms a visible image that contains the embedded watermark. Again, the decryption, decompression, watermarking, and image forming units are contained within a secure environment.

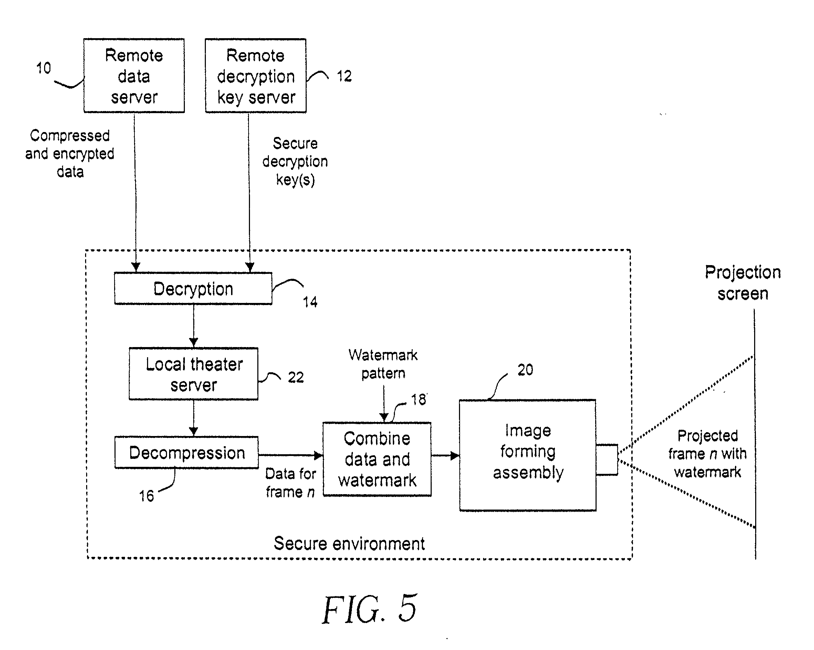

It may also be advantageous to move the local theater server within the secure environment. As illustrated in Fig. 5, this arrangement allows the compressed and encrypted movie data to be decrypted by the decryption unit **14,** and the resulting compressed movie data is then stored on the local theater server **22.** Because the local theater server **22** is contained within the secure environment, it is possible to store the compressed data in unencrypted form while still preventing access to the data by unauthorized individuals. At the time that a movie is presented, the local theater server sends the compressed movie data to the decompression unit **16,** and the resulting uncompressed movie data is then watermarked by the watermarking unit **18** and displayed using the image forming assembly **20.** It is also possible that the local theater server could be located after the decryption unit **14** and the decompression unit **16,** in which case the local theater server **22** would store decrypted, uncompressed movie data within the secure environment. While this system is inefficient in terms of memory requirements, it simplifies the processing that must be performed on the movie data at the time of presentation. It is much simpler to decrypt and decompress the movie data once, rather than do it for each movie showing.

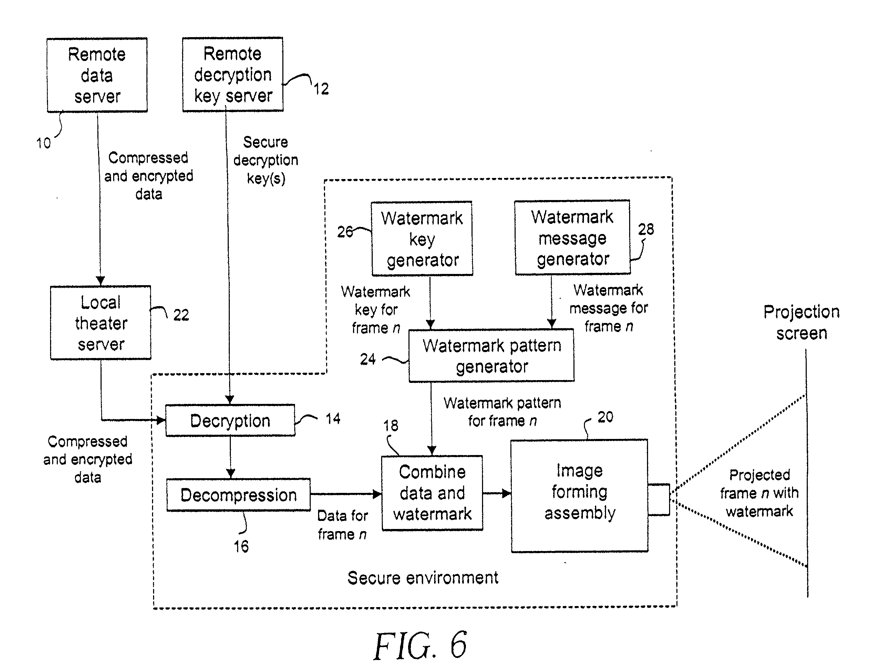

In the watermarking systems that were just described and illustrated in Figs. 1-5, a watermark pattern is made available to the watermarking unit **18.** This pattern could be preset in the watermarking unit at the time of manufacturing, and it could contain information that represents a unique ID for the watermarking unit and/or the projector. However, this approach is very limiting, and it is generally desirable to modify the watermark pattern over time, in order to: 1) provide additional security to the watermark information; 2) update the watermark information (to reflect time stamp information, for example); and 3) minimize the visibility of the watermark pattern to the theater audience. In another preferred embodiment of the present invention, the watermark pattern is modified by altering the watermark key and/or the watermark message at various points in the sequence of movie frames. As illustrated in Fig. 6, the preset watermark pattern is replaced by a watermark pattern generator **24,** which accepts a watermark key from a watermark key generator **26** and a watermark message from a watermark message generator **28.** The watermark pattern generator **24,** key generator **26,** message generator **28,** and watermarking unit **18** are all contained within a secure environment. As described previously, the secure environment for the these watermarking components could consist of a single physical unit (which may include other system components such as the image forming assembly **20),** or the watermarking components could reside in two or more physical units, with secure communication links to convey data between the physical units. For example, the watermark pattern generator **24,** key generator **26,** and message generator **28** could be contained in one physical unit (which could be located at the theater or it could be located at a remote site), and the watermarking unit **18** could be contained in a separate physical unit.

The watermark key and/or the watermark message can be modified as desired throughout a sequence of movie frames using the system illustrated in Fig. 6. For example, the watermark key could be changed after every *m* frames, where *m* ≥ 1, or the key could be changed in a random manner within the watermark key generator **26.** It may be advantageous to use only a limited number of different keys, since the key must be known in order to extract the watermark. With a limited number of keys, it is easy to perform an exhaustive search of the different keys during a subsequent watermark extraction process. By changing the watermark key, additional security is provided to the watermarking process since knowledge of the key that is used for one frame may not provide any knowledge of the key used for other frames. In addition, in most watermarking techniques, the use of a different key will result in a completely different watermark pattern. This prevents an individual from determining the watermark pattern by averaging multiple frames (which cancels dynamic image content, but reinforces a static watermark pattern). Moreover, a watermark pattern that changes throughout time may be less detectable/objectionable to a viewer in the theater audience.

Likewise, the watermark message can be changed for each movie sequence, with every frame, or after a certain number of frames within a specific sequence. In particular, the watermark message can be modified to include specific presentation information, such as a unique ID for the theater and the specific screen, as well as time and date information. Furthermore, the time information could be updated throughout the sequence of movie frames, so that a new time stamp is included in the watermark information after every *m* frames, where *m* ≥ 1. To provide a time stamp with sufficient validity, the watermark message generator **28** can include an integral time clock within the secure environment. An unauthorized individual would not be able to modify the time clock without disabling one or more necessary components within the movie data processing path.

It is noted that the watermark pattern generator **24** needs to produce a new watermark pattern only when either the watermark key or watermark message is changed. The watermark pattern generator can monitor the key and message that are provided by the watermark key generator **26** and the watermark message generator **28,** respectively, and if either the key or message is modified, a new watermark pattern is produced. It is also possible to have a limited number of watermark patterns that are pre-computed and stored in memory within the watermark pattern generator **24.** In this case, the watermark key and message act as an address in a lookup table, and the corresponding watermark pattern is retrieved from the memory.

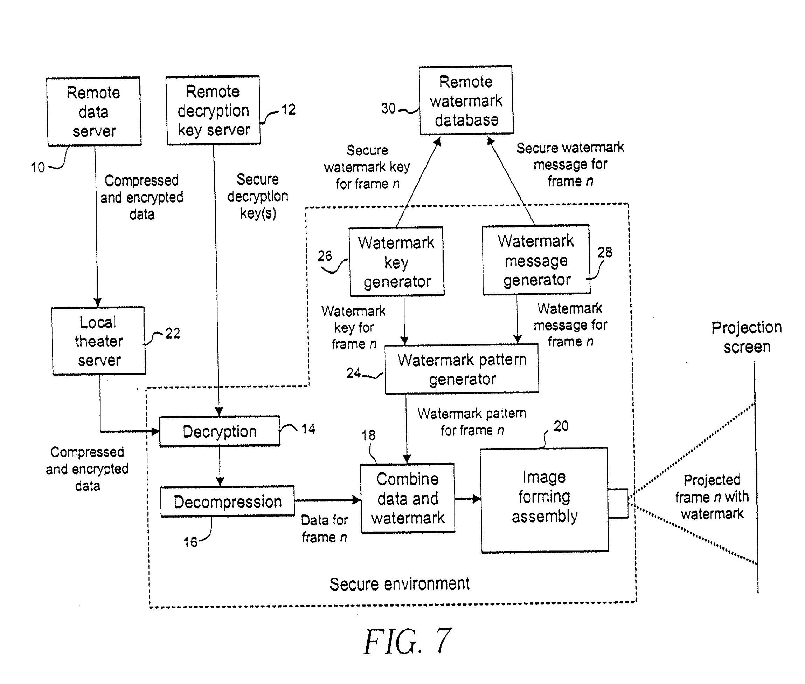

In another preferred embodiment of the present invention, the watermark key(s) that are produced by the watermark key generator **26** and the watermark message(s) that are produced by the watermark message generator **28** are securely sent to a remote watermark database **30.** As illustrated in Fig. 7, the watermark key(s) produced by the watermark key generator **26** is sent via a secure communication link to a remote watermark database **30** for storage and subsequent use in the extraction of the watermark information from an unauthorized copy of the movie data. The secure communication link could be provided using well-known encryption methods and protocols. In the watermark database, each watermark key can be associated with a specific frame or a series of frames, from a given movie and a specific theater/screen and/or showing. However, it may also be sufficient merely to record the key or keys that were used for a particular theater/screen and movie showing, without the association with a specific frame or frames. Similarly, the watermark message generated by the watermark message generator **28** is sent via secure means to the remote watermark database **30,** where it can be associated with a specific frame, or series of frames, and/or a specific theater/screen and showing. At the remote watermark database **30,** the watermark key(s) and message(s) can be stored in encrypted form, or in decrypted form if the database is contained within its own secure environment.

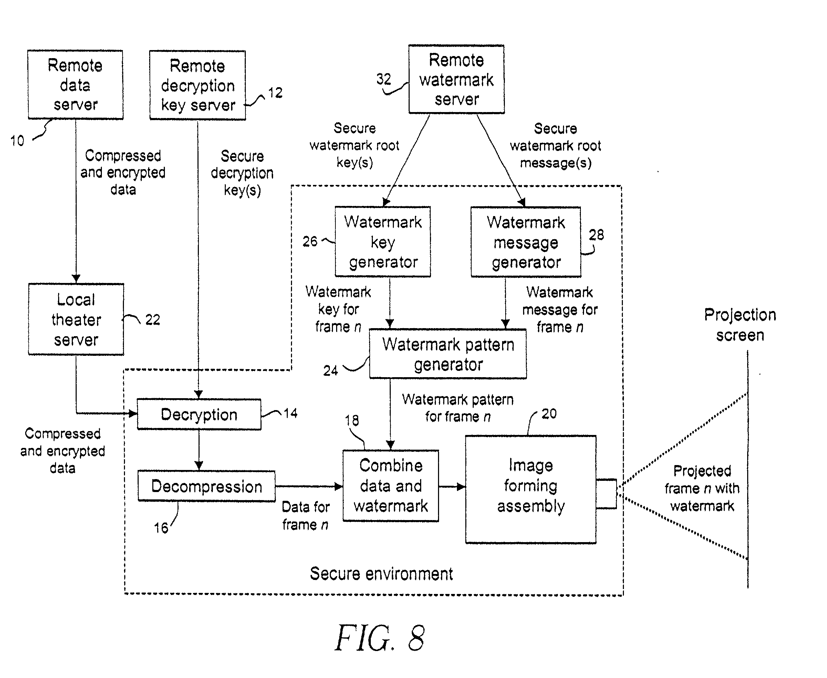

In another preferred embodiment of the present invention, all or part of the watermark key(s) and/or watermark message(s) are provided by a remote watermark server. As illustrated in Fig. 8, a remote watermark server **32** securely sends a watermark root key(s) to the watermark key generator **26,** which is contained within the secure environment. If the root key is only a partial key, the watermark key generator **26** adds a suffix and/or prefix to the root key to form the complete key. Alternatively, the remote server could send a complete key, which would then be passed unchanged to the watermark pattern generator. A complete key also could be used as initialization key that is later modified by the watermark key generator **26.** The remote watermark server **32** could also send a number of root keys, where each root key is associated with a particular frame or sequence of frames in a movie.

Similarly, the remote watermark server **32** securely sends a watermark root message(s) to the watermark message generator **28,** which is contained within the secure environment. The root message could include a unique ID for the particular theater and screen and/or unique presentation ID for the specific showing of the movie. The watermark message generator **28** could then add a time stamp to the unique ID, where the time stamp is updated at various points in the showing of the movie. The root message could also be a complete message (or a series of messages) that includes theater and time information.

The security of the watermark root keys and root messages is provided during transmission by well-known encryption methods and protocols. Moreover, the remote watermark server is protected within a secure environment to prevent unauthorized individuals from altering the root keys or messages prior to their delivery to the theater. The remote watermark server also maintains a secure database that associates the watermark root key(s) and root message(s) with a specific movie frame, or series of frames, and/or a specific theater/screen and showing.

## Claims

1. A system for securely embedding a watermark representing message data into movie data consisting of one or more frames of a digital image sequence, and displaying one or more frames of the digital image sequence containing the embedded watermark, comprising:
means for providing a secure environment;
means for combining the movie data with the watermark within the secure environment to produce watermarked movie data; and
means for forming a displayed image from the watermarked movie data within the secure environment.

2. The system according to Claim 1, wherein the movie data is uncompressed data.

3. The system according to Claim 1, wherein the movie data is compressed data.

4. The system according to Claim 1, further including means for storing the movie data within the secure environment.

5. The system according to Claim 1, wherein the movie data has been encrypted to produce encrypted data representing the digital image sequence, and further including means for decrypting the encrypted data within the secure environment to produce movie data.

6. The system according to Claim 1, wherein the movie data has been compressed and encrypted to produce compressed and encrypted data representing the digital image sequence, and further including means for decrypting the compressed and encrypted data within the secure environment to produce compressed data, and means for decompressing the compressed data within a secure environment to produce movie data.

7. The system according to Claim 6, further including means for storing the compressed and encrypted data.

8. The system according to Claim 6, further including means for storing the compressed data within the secure environment.

9. The system according to Claim 1, wherein the secure environment is provided by a combination of physical and logical protection techniques.
